# EUROPEAN PATENT APPLICATION

(11) **EP 3 587 262 A1**
(43) Date of publication of application: **01.01.2020**
(21) Application number: 18180586.2
(22) Date of filing: 28.06.2018
(51) Int. Cl.: B64C 39/02

(54) **AIRCRAFT WITH UMBRELLA STRUCTURE**

(71) Applicant: KUNSHAN AMPHENOL ZHENGRI ELECTRONICS CO., LTD., 215333 Kunshan City, Jiangsu Province (CN); Amphenol LTW Technology Co., Ltd., 23675 New Taipei City (TW)
(72) Inventor: KAN, Luc, 23675 NEW TAIPEI CITY (TW)
(74) Representative: Lermer, Christoph

(57) **Abstract**

An aircraft (1) with an umbrella structure (U) is provided, which includes a main body (11), a base (12) and a plurality of umbrella arms (14). The base (12) is disposed on the main body (11). One end of each umbrella arm (14) is installed on the base (12), and each umbrella arm (14) includes an arm body (141), where the both sides of the arm body (141) are provided with a first fixation element (1411) and a second fixation element (1412) respectively, and an umbrella cloth (143) connected to the second fixation element (1411) is disposed inside the arm body (141). The umbrella arms (14) are able to spread out to form a radiating arrangement, and the second fixation element (1412) of each umbrella arm (14) is fixed on the first fixation element (1411) of the adjacent umbrella arm (14) at one side thereof to pull out the umbrella cloth (143) disposed therein, such that the umbrella arms (14) can form the umbrella structure (U).

## Description

### TECHNICAL FIELD

The present disclosure relates to an aircraft, in particular to an aircraft with umbrella structure.

### BACKGROUND

Due to the advance of technology in recent years, unmanned aerial vehicle (UAV) has become a consumer electronics product; people can record videos, take pictures, etc., with unmanned aerial vehicles. However, currently available unmanned aerial vehicles still have a lot of shortcomings which must be overcome.

For example, the power consumption of the unmanned aerial vehicles is usually quite high, so the batteries of the unmanned aerial vehicles tend to be exhausted in a short time; thus, users should frequently charge the unmanned aerial vehicles.

Besides, as the size of the unmanned aerial vehicles is usually large because of improper structure design, the unmanned aerial vehicles usually occupy a lot of space.

Further, the unmanned aerial vehicles can only be used to record videos and take pictures without other additional functions, so the application of the unmanned aerial vehicles is strictly limited.

Therefore, it has become an important issue to provide an aircraft capable of overcoming the above drawbacks of the currently available unmanned aerial vehicles.

### SUMMARY

The present disclosure is related to an aircraft with umbrella structure. In one embodiment of the disclosure, the aircraft with umbrella structure may include a main body, a base and a plurality of umbrella arms. The base is disposed on the top of the main body. One end of each umbrella arm is installed on the base, and each umbrella arm includes an arm body, where the both sides of the arm body are provided with a first fixation element and a second fixation element respectively, and an umbrella cloth connected to the second fixation element is disposed inside the arm body. The umbrella arms are able to spread out to form a radiating arrangement, and the second fixation element of each umbrella arm is fixed on the first fixation element of the adjacent umbrella arm at one side thereof to pull out the umbrella cloth disposed therein, such that the umbrella arms can form the umbrella structure.

In a preferred embodiment of the present disclosure, one end of each umbrella arm is detachably installed on the base.

In a preferred embodiment of the present disclosure, the first fixation elements and the second fixation elements are magnets.

In a preferred embodiment of the present disclosure, each of the umbrella arm further includes a base body, and the base body includes a protrusion and a recess, such that the umbrella arms are able to be combined with one another.

In a preferred embodiment of the present disclosure, the aircraft further includes an inflatable structure and a plurality of inflatable arms disposed on the bottom of the main body, where the inflatable arms are connected to the inflatable structure.

In a preferred embodiment of the present disclosure, the aircraft includes a plurality of rotors connected to the inflatable arms respectively.

In a preferred embodiment of the present disclosure, the aircraft further includes a control stick, where one end of the control stick is detachably disposed on the bottom of the main body; the control stick includes an air pump, and the air pump is connected to the inflatable structure to inflate the inflatable structure in order to further inflate the inflatable arms, such that the inflatable arms are in the elongating status.

In a preferred embodiment of the present disclosure, the control stick includes a fixation part; the control stick is disposed on one end of the control stick, and one end of the control stick is detachably installed on the main body via the fixation part.

In a preferred embodiment of the present disclosure, the control stick further includes a motor, and the motor is connected to the air pump in order to drive the air pump.

In a preferred embodiment of the present disclosure, the control stick further includes a battery, and the battery is connected to the motor in order to power the motor.

In a preferred embodiment of the present disclosure, the control stick further includes a switch, and the switch is connected to the battery in order to turn on or turn off the battery.

In a preferred embodiment of the present disclosure, the umbrella cloths are solar cloths, such that the umbrella cloths are able to transfer light into energy.

In a preferred embodiment of the present disclosure, the aircraft is controlled by a mobile device or a remote controller via Wi-Fi, Bluetooth, etc.

In a preferred embodiment of the present disclosure, the base includes a positioner, and the positioner transmits a positioning signal to a mobile device.

In a preferred embodiment of the present disclosure, the base includes a plurality of sensors and a flight controller, and the sensors are connected to the flight controller.

In a preferred embodiment of the present disclosure, the sensors include a light sensor, a rain sensor and a wind sensor.

In a preferred embodiment of the present disclosure, the aircraft further includes a camera disposed on the main body, where the camera tracks the position of a user for the flight controller to control the aircraft accordingly.

In a preferred embodiment of the present disclosure, the aircraft further includes a lighting device disposed on the main body.

The aircraft with umbrella structure according to the present disclosure may have the following advantages:
(1) In one embodiment of the present disclosure, the aircraft are provided with foldable rotors having special inflatable structure and detachable umbrella structure to minimize the size of the aircraft, so the aircraft can be more compact.
(2) In one embodiment of the present disclosure, the umbrella cloths of the aircraft can be a solar cloth, which can directly transform light into energy to charge the energy storage device inside the aircraft; besides, the aircraft can also be charged by an AC power socket; therefore, the user no longer has to frequently charge the aircraft, which is more convenient in use.
(3) In one embodiment of the present disclosure, the umbrella structure of the aircraft can be used to not only record videos and take pictures, but also track the user to serve as the lighting, and shelter the user from wind, rain and sunshine, so the aircraft can provide more additional functions, which is more comprehensive in use.
(4) In one embodiment of the present disclosure, the aircraft can detect the direction of light, the direction of rain falling and the direction of wind to automatically adjust the position and inclination angle thereof accordingly, such that the aircraft can more effectively shelter the user from wind, rain and sunshine.
(5) In one embodiment of the present disclosure, the aircraft can be directly controlled by a mobile device via Wi-Fi, Bluetooth, etc., so is more flexible in use.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG. 1∼FIG. 9 are schematic views of a first embodiment of an aircraft with umbrella structure in accordance with the present disclosure.

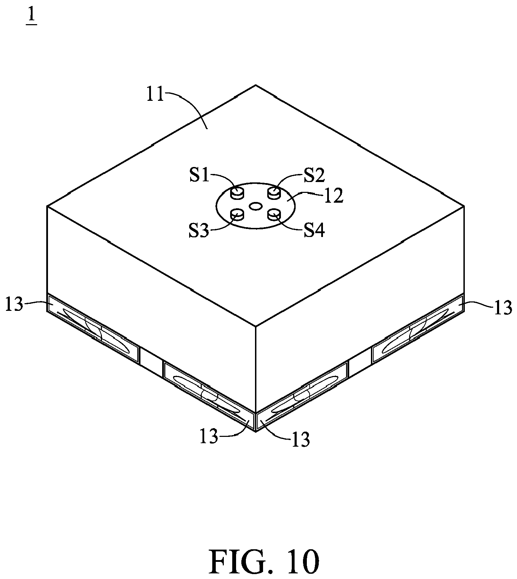

FIG. 10 is a schematic view of a second embodiment of an aircraft with umbrella structure in accordance with the present disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

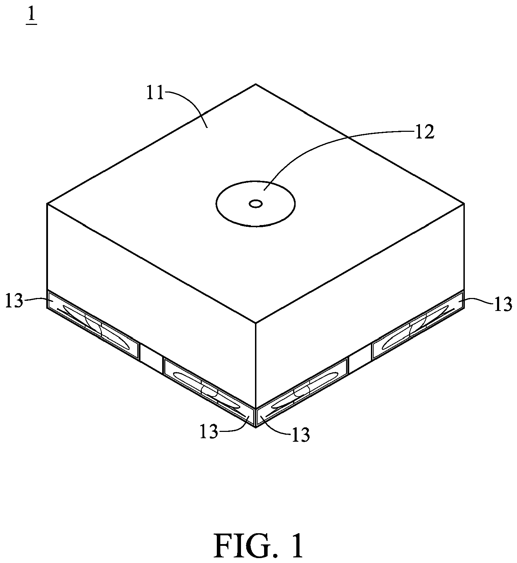

FIG. 1~FIG. 9 are schematic views of a first embodiment of an aircraft with umbrella structure in accordance with the present disclosure. As shown in FIG. 1, the aircraft with umbrella structure 1 1 includes a main body 11, a base 12 and a plurality of rotors 13.

The base 12 is disposed in the first space 11 on the top of the main body 11.

The rotors are disposed on the bottom of the main body 11.

Currently, the aircraft 1 is in the folded status, so the size of the aircraft 1 can be minimized.

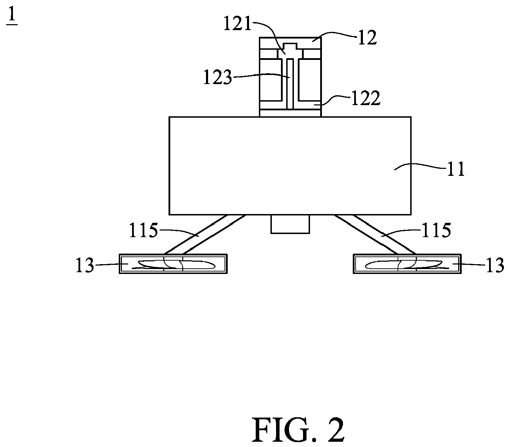

As shown in FIG. 2, the aircraft 1 is currently in the unfolded status; in the unfolded status, the base 12 leaves from the first space 11 and protrudes from the main body 11. More specifically, the base 12 includes an upper grove 121, a lower groove 122 and a skid rail 123. The main body 11 includes a plurality of inflatable arms 115 disposed on the bottom of the main body 11 and connected to the rotors 13 respectively. In the unfolded status, these inflatable arms 115 can elongate in the direction away from the main body 11.

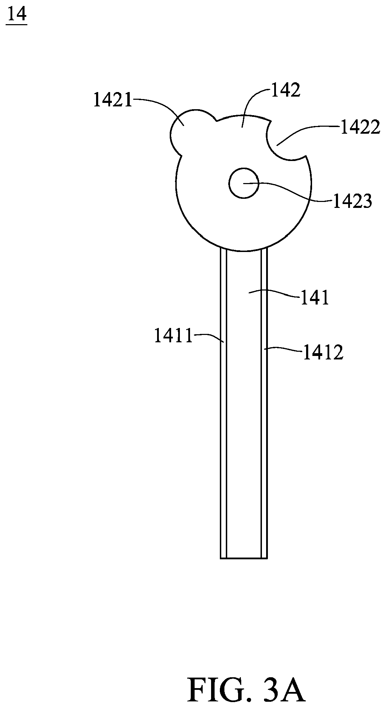

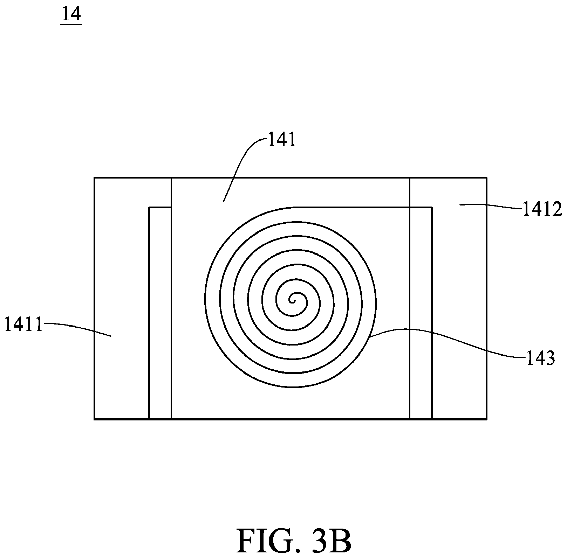

The aircraft 11 further includes a plurality of umbrella arms 14 and one end of each umbrella arm 14 is detachably installed on the base 12. As shown in FIG. 3A, the umbrella arm 14 further includes an arm body 141 and a base body 142. The both sides of the arm body 141 are provided with a first fixation element 1411 and a second fixation element 1412 respectively. The base body 142 includes a protrusion 1421, a recess 1422 and a central hole 1423 disposed in the inner space of the base 12, so these umbrella arms 14 can be combined with one another. In an embodiment, the first fixation elements 1411 and the second elements 1412 may be magnets, and the polarity of the first fixation elements 1411 is opposite to the that of the second fixation elements 1412. As shown in FIG. 3B, each arm body 141 includes an umbrella cloth 143; the umbrella cloth 143 is disposed inside the arm body 141 and connected to the fixation element 1412.

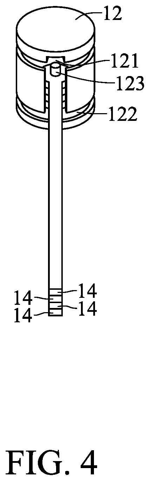

As shown in FIG. 4, the base body 142 of each umbrella arm 14 can be placed into the inner space of the base 12 from the upper groove 121, and the base body 142 of each umbrella arm 14 can be penetrated by the skid rail 123 via the central hole 1423, such that these umbrella arms 14 can stack in the inner space of the base 12.

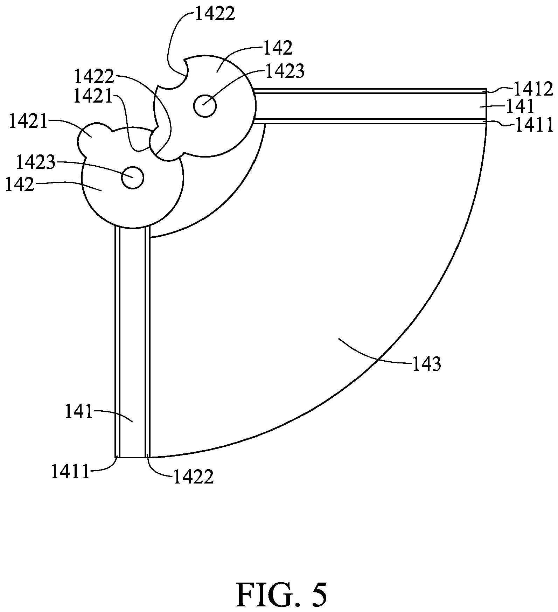

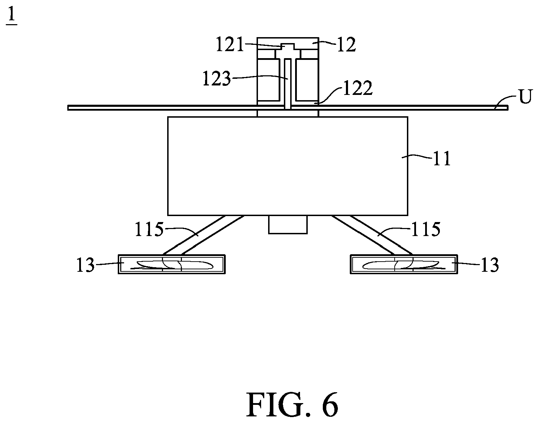

Then, as shown in FIG. 5, the umbrella arm 14 at the bottom can rotate along the lower groove 122 until the protrusion 1421 of the base body 142 thereof engages with the recess 1422 of the umbrella arm 14 disposed thereon. Meanwhile, the first fixation element 1411 of the arm body 141 of the umbrella arm 14 at the bottom can attract the second fixation element 1412 of the arm body 141 of the umbrella arm 14 disposed thereon, and simultaneously pulls out the umbrella cloth 143 connected to the second fixation element 1412. As shown in FIG. 6, by means of the above structure, the umbrella arms 14 can form the umbrella structure U.

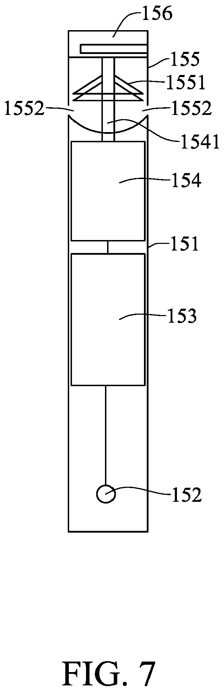

As shown in FIG. 7, the control stick 15 includes a stick body 151, a switch 152, a battery 153, a motor 154, an air pump 155 and a fixation part 156. The air pump 155 and the fixation part 156 are disposed at one end of the stick body 151, the battery 153 and the motor 154 are disposed inside the stick body 1551, and the switch 152 is disposed on the surface of the stick body 151. The switch 152 is connected to the battery 153 to turn on or turn off the battery 153, the battery 153 is connected to the motor 154 to power the motor 154, and the motor 154 is connected to the air pump 1555 to drive the air pump 155.

The air pump 155 includes a turbine 1551 and several air inlets 1552. The turbine 1551 is connected to the shaft 1541 of the motor 154. When the motor 154 drives the turbine 1551 155, air can be drawn into the air pump 155 from the air inlets 1552.

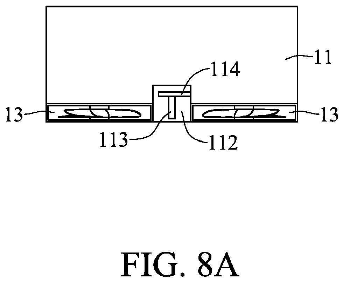

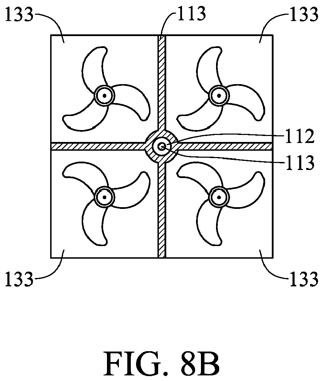

As shown in FIG. 8A and FIG. 8B, the main body 11 further includes a second space 112, an inflatable structure 113, a fixation structure 114 and the aforementioned inflatable arms 115 disposed on the bottom thereof.

The inflatable structure 113 is connected to the base 12 and the inflatable arms 115, and the inflatable arms 115 are connected to the rotors 13 respectively.

The user can insert one end of the control stick 15 into the second space 112 and rotate the control stick 15 to fix the fixation part 156 of the control stick 15. Meanwhile, the air pump 115 can be connected to the inflatable structure 113. Besides, the user can rotate the control stick 15 in the reverse direction to remove the control stick 15 from the main body 11.

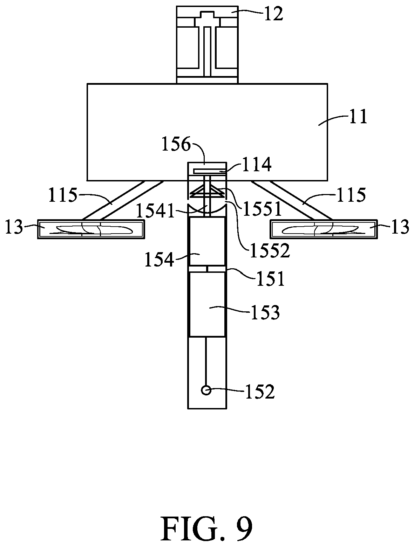

As shown in FIG. 9, when the user presses the switch 152 to turn on the motor 154, the motor 154 drives the air pump 155 to inject air into the inflatable structure 113 to inflate the inflatable arms 115; then, the inflatable arms 115 is in the elongating status. In the meanwhile, the base 12 is driven by the inflatable structure 115 to leave from the first space 111 and protrude from the main body 11. Afterward, the user can install the umbrella arms 14 by the aforementioned steps. Finally, after the control stick 15 is removed, the user can use the aircraft 1.

In addition, the aircraft 1 further includes a flight controller, a camera, a lighting device and an energy storage device (not shown in the drawings). The flight controller is disposed inside the base 12. The camera is disposed inside the base 12, which can track the user, such that the flight controller can control the rotors 13 according to the position of the user in order to control the aircraft 1 to follow the user. The lighting device is disposed on the main body 11 to serve as a light source. In an embodiment, the umbrella cloths 143 are solar cloths, which can charge the energy storage device in order to provide additional electricity for the aircraft 1. Moreover, the user can use a mobile device (e.g. smart phone, tablet computer, etc.) or a remote controller to directly control the aircraft 1 via Wi-Fi, Bluetooth, etc., in order to control the aircraft 1 to perform different functions.

By means of the above structure, when the user wants to use the aircraft 1, the user can use the control stick 15 to unfold the aircraft 1 and install the umbrella arms 14 on the base 12; then, the user can control the aircraft 1 to perform various functions. On the other hand, when the user is done with the aircraft 1, the user can remove the umbrella arms 14 from the base 12 and fold the aircraft 1 to make the aircraft 1 return to the folded status; then, the size of the aircraft 1 is minimized, so will not occupy a lot of space.

The embodiment just exemplifies the present disclosure and is not intended to limit the scope of the present disclosure; any equivalent modification and variation according to the spirit of the present disclosure is to be also included within the scope of the following claims and their equivalents.

It is worthy to point out that the size of the conventional unmanned aerial vehicles is usually large because of improper structure design, so the conventional unmanned aerial vehicles usually occupy a lot of space. On the contrary, according to one embodiment of the present disclosure, the aircraft are provided with foldable rotors having special inflatable structure and detachable umbrella structure to minimize the size of the aircraft, so the aircraft can be more compact.

Further, the power consumption of the conventional unmanned aerial vehicles is usually quite high, so the batteries of the conventional unmanned aerial vehicles tend to be exhausted in a short time; thus, users should frequently charge the unmanned aerial vehicles, which is very inconvenient. On the contrary, according to one embodiment of the present disclosure, the umbrella cloths of the aircraft can be a solar cloth, which can directly transform light into energy to charge the energy storage device inside the aircraft; besides, the aircraft can also be charged by an AC power socket; therefore, the user no longer has to frequently charge the aircraft, which is more convenient in use.

Moreover, according to one embodiment of the present disclosure, the aircraft can be directly controlled by a mobile device via Wi-Fi, Bluetooth, etc., so is more flexible in use. Therefore, the present disclosure definitely has an inventive step.

The elements of the aircraft 1 and the detailed structure thereof are similar to the previous embodiment, so will not be described therein again. The difference between the embodiment and the previous embodiment is that the aircraft 1 further includes a positioner S1, a light sensor S2, a rain sensor S3 and a wind sensor S4.

The positioner S1 is disposed on the base 12 and connected to the flight controller. The positioner S1 can transmit the positioning signals to the mobile device of the user, so the user can know the current position of the aircraft 1.

The light sensor S2, the rain sensor S3 and the wind sensor S4 are disposed on the base 12 and connected to the flight controller. The light sensor S2, the rain sensor S3 and the wind sensor S4 can detect the direction of light, the direction of rain falling and the direction of wind, so the flight controller can automatically adjust the position and inclination angle of the aircraft accordingly so as to effectively shelter the user from wind, rain and sunshine.

The embodiment just exemplifies the present disclosure and is not intended to limit the scope of the present disclosure; any equivalent modification and variation according to the spirit of the present disclosure is to be also included within the scope of the following claims and their equivalents.

It is worthy to point out that the conventional unmanned aerial vehicles can only be used to record videos and take pictures without other additional functions, so the application of the conventional unmanned aerial vehicles is strictly limited. On the contrary, according to one embodiment of the present disclosure, the aircraft can be used to not only record videos and take pictures, but also can detect the direction of light, the direction of rain falling and the direction of wind to automatically adjust the position and inclination angle thereof accordingly so as to effectively shelter the user from wind, rain and sunshine. Thus, the aircraft can provide more additional functions, so is more comprehensive in use.

To sum up, according to one embodiment of the present disclosure, the aircraft are provided with foldable rotors having special inflatable structure and detachable umbrella structure to minimize the size of the aircraft, so the aircraft can be more compact.

Also, according to one embodiment of the present disclosure, the umbrella cloths of the aircraft can be a solar cloth, which can directly transform light into energy to charge the energy storage device inside the aircraft; besides, the aircraft can also be charged by an AC power socket; therefore, the user no longer has to frequently charge the aircraft, which is more convenient in use.

Besides, according to one embodiment of the present disclosure, the umbrella structure of the aircraft can be used to not only record videos and take pictures, but also track the user to serve as the lighting, and shelter the user from wind, rain and sunshine, so the aircraft can provide more additional functions, which is more comprehensive in use.

Moreover, according to one embodiment of the present disclosure, the aircraft can detect the direction of light, the direction of rain falling and the direction of wind to automatically adjust the position and inclination angle thereof accordingly, such that the aircraft can more effectively shelter the user from wind, rain and sunshine.

Furthermore, according to one embodiment of the present disclosure, the aircraft can be directly controlled by a mobile device via Wi-Fi, Bluetooth, etc., so is more flexible in use.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. An aircraft (1) with an umbrella structure (U), comprising:
a main body (11);
a base (12), disposed on the main body (11); and
a plurality of umbrella arms (14), one end of each umbrella arm (14) being installed on the base (12), and each umbrella arm (14) comprising an arm body (141), a first fixation element (1411), a second fixation element (1412) and an umbrella cloth (143), wherein the first fixation element (1411) and the second fixation element (1412) are disposed on both sides of the arm body (141) respectively, and the umbrella cloth (143) is connected to the second fixation element (1412) and disposed inside the arm body (141);
wherein the umbrella arms (14) are able to spread out to form a radiating arrangement, and the second fixation element (1412) of each umbrella arm (14) is fixed on the first fixation element (1411) of the adjacent umbrella arm (14) at one side thereof to pull out the umbrella cloth (143) disposed therein, such that the umbrella arms (14) form the umbrella structure.

2. The aircraft (1) with the umbrella structure (U) of claim 1, wherein one end of each umbrella arm (14) is detachably installed on the base (12).

3. The aircraft (1) with the umbrella structure (U) of claim 1, wherein the first fixation elements (1411) and the second fixation elements (1412) are magnets.

4. The aircraft (1) with the umbrella structure (U) of claim 1, wherein each of the umbrella arm (14) further comprises a base body (142), and the base body (142) comprises a protrusion (1421) and a recess (1422), whereby the umbrella arms (14) are able to be combined with one another.

5. The aircraft (1) with the umbrella structure (U) of claim 1, further comprising an inflatable structure (113) and a plurality of inflatable arms (115) disposed on a bottom of the main body (11), wherein the inflatable arms (115) are connected to the inflatable structure.

6. The aircraft (1) with the umbrella structure (U) of claim 5, further comprising a plurality of rotors (13) connected to the inflatable arms (115) respectively.

7. The aircraft (1) with the umbrella structure (U) of claim 6, further comprising a control stick (15), wherein one end of the control stick (15) is detachably disposed on a bottom of the main body (11); the control stick (15) comprises an air pump (155), and the air pump (155) is connected to the inflatable structure (113) to inflate the inflatable structure (113) in order to further inflate the inflatable arms (115), wherein the inflatable arms (115) are in an elongating status.

8. The aircraft (1) with the umbrella structure (U) of claim 7, wherein the control stick (15) comprises a fixation part (156); the control stick (15) is disposed on one end of the control stick (15), and one end of the control stick (15) is detachably installed on the main body (11) via the fixation part (156).

9. The aircraft (1) with the umbrella structure (U) of claim 7, wherein the control stick (15) further comprises a motor (154), a battery (153) and a switch (152); the motor (154) is connected to the air pump (155) in order to drive the air pump (155); the battery (153) is connected to the motor (154) in order to power the motor (154); the switch (152) is connected to the battery (153) in order to turn on or turn off the battery (153).

10. The aircraft (1) with the umbrella structure (U) of claim 1, wherein the umbrella cloths (143) are solar cloths, whereby the umbrella cloths (143) are able to transfer light into energy.

11. The aircraft (1) with the umbrella structure (U) of claim 1, wherein the aircraft (1) with the umbrella structure (U) is controlled by a mobile device.

12. The aircraft (1) with the umbrella structure (U) of claim 1, wherein the base comprises a positioner (S1), and the positioner transmits a positioning signal to a mobile device.

13. The aircraft (1) with the umbrella structure (U) of claim 1, wherein the base comprises a plurality of sensors and a flight controller, and the sensors are connected to the flight controller, and the sensors include one or more than one of a light sensor (S2), a rain sensor (S3) and a wind sensor (S4).

14. The aircraft (1) with the umbrella structure (U) of claim 13, further comprising a camera disposed on the main body (11), wherein the camera tracks a position of a user for the flight controller to control the aircraft (1) with the umbrella structure (U) accordingly.

15. The aircraft (1) with the umbrella structure (U) of claim 1, further comprising a lighting device disposed on the main body (11).
